# EUROPÄISCHE PATENTSCHRIFT

(11) **EP 1 280 648 B1**
(45) Veröffentlichungstag und Bekanntmachung des Hinweises auf die Patenterteilung: **05.03.2008**
(21) Anmeldenummer: 01929557.5
(22) Anmeldetag: 12.04.2001
(51) Int. Cl.: B29C 45/54

(54) **SPRITZEINHEIT FÜR SPRITZGIESSMASCHINEN MIT KONTINUIERLICH ARBEITENDER PLASTIFIZIEREINHEIT**
INJECTION UNIT FOR INJECTION MOLDING MACHINES WITH A CONTINUOS PLASTICIZING UNIT
UNITE D'INJECTION POUR MACHINES DE MOULAGE PAR INJECTION, COMPORTANT UNE UNITE DE PLASTIFICATION A FONCTIONNEMENT CONTINU

(30) Priorität: 14.04.2000 DE 10018542
(43) Veröffentlichungstag der Anmeldung: 05.02.2003
(73) Patentinhaber: KraussMaffei Technologies GmbH, 80997 München (DE)
(72) Erfinder: ZIMMET, Rainer, 80804 München (DE)
(74) Vertreter: Zollner, Richard
(86) Internationale Anmeldenummer: PCT/EP2001/004250
(87) Internationale Veröffentlichungsnummer: WO 2001/078964

(56) Entgegenhaltungen:
- WO-A-97/11829
- DE-A- 2 049 991
- DE-A- 2 201 404
- DE-A- 4 018 484
- DE-A- 4 331 207
- US-A- 3 191 233

## Beschreibung

Die Erfindung betrifft eine Spritzeinheit für Spritzgießmaschinen mit kontinuierlich arbeitender Plastifiziereinheit.

Im Gegensatz zu herkömmlichen Spritzgießmaschinen, bei der die Plastifizierung des Kunststoffgranulats und die Spritzdruckerzeugung durch eine mit einer Rückströmsperre ausgerüstete Schubschnecke bewerkstelligt wird, hat die Funktionsaufteilung auf eine Schneckenplastifiziereinheit einerseits und eine Kolbenspritzeinrichtung andererseits den Vorteil, dass eine Schneckenplastifiziereinheit mit optimalen Plastifizierleistungen zum Einsatz gebracht werden kann. Außerdem hat die Verwendung mehrerer Kolbenspritzeinrichtungen, die von einer Schneckenplastifziereinheit gespeist werden, den Vorteil, dass die Schneckenplastifiziereinheit kontinuierlich betrieben werden kann, weil wechselweise die Schmelze den verschiedenen, in der Regel zwei, Kolbenspritzeinrichtungen zugeleitet wird. Der kontinuierliche Betrieb der Plastifiziereinheit bietet viele Vorteile. Zunächst wirkt er sich vorteilhaft auf die Homogenität der Schmelze aus. Außerdem erhöht sich die Plastifizierleistung, da die Stillstandszeit entfällt oder es kann für die gleiche Leistung eine kleinere Schnecke eingesetzt werden. Zudem wird der Verschleiß erheblich verringert, besonders bei großen Schnecken, da das stetige Wiederanfahren entfällt (Wegfall des adhäsiven Verschleisses beim Anfahren). Schließlich werden auch der Motor und das Getriebe weniger beansprucht, da sie gleichmäßiger belastet werden.

Eine derartige Schneckenplastifiziereinheit mit nachgeschalteten Kolbenspritzeinrichtungen kann auch in besonders geeigneter Weise zum Einmischen vielfältiger Komponenten als Compounder genutzt werden. Da die Plastifizierschnecke im Gegensatz zu herkömmlichen Spritzgießmaschinen nicht vor- und zurückbewegt wird, können feste und flüssige Zuschlagstoffe immer an der gleichen Stelle (bezogen auf die Schnecke) zugegeben werden.

Bei der Herstellung von geschäumten Produkten erfolgt die Zugabe des Treibmittels ebenfalls immer an der gleichen Stelle. Der kontinuierliche Betrieb verhindert den unerwünschten Druckabbau des Treibmittels, wie dies bei herkömmlichen Spritzgießmaschinen in der Stillstandszeit der Fall ist.

Eine derartige Spritzgießmaschine mit einer gesonderten Plastifiziereinheit einerseits und mehreren Kolbenspritzeinrichtungen andererseits hat jedoch den Nachteil, dass die mehrfach vorhandenen Kolbenspritzeinrichtungen beträchtlichen Bauraum erfordern.
Im weiteren müssen lange, zu beheizende Schmelzeleitungen mit entsprechenden Druckverlusten in Kauf genommen werden. Ferner sind zum wechselweisen Befüllen der Kolbenspritzeinheiten Umsteuerventile notwendig. In der Regel sind auch ungünstige Spüleigenschaften gegeben, da die Zylinderräume der Kolbenspritzeinheiten nicht nach dem Prinzip eines kontinuierlich nur in einer Richtung verlaufenden Schmelzestromes (first in, first out) befüllt und entleert werden können. Ein Farbwechsel ist daher sehr aufwendig.

Eine Spritzgießmaschine mit gesonderter und kontinuierlich arbeitender Plastifiziereinheit und zwei Kolbenspritzeinrichtungen, aber mit unidirektionalem Schmelzefluss (first in, first out), ist aus der DE 195 05 984 A1 bekannt. Diese Druckschrift zeigt eine Spritzgießmaschine, bei der einer aus zwei gleichlaufenden Plastifizierschnecken bestehenden Schneckenplastifiziereinheit zwei Kolbeneinspritzeinrichtungen nachgeordnet sind, die, gesteuert über Umsteuerventile, wechselweise mit Schmelze befüllbar sind. Zur Erzielung eines unidirektionalen Schmelzestroms wird in der DE 195 05 984 A1 vorgeschlagen, bei jeder Kolbenspritzeinrichtung die Schmelze über teleskopisch verschiebbare Schmelzeleitungen in den jeweiligen Kolbenboden der Kolbenspritzeinrichtungen zu leiten, jedoch wird dadurch die Länge der Schmelzeleitung noch beträchtlich erhöht.

Die in der WO86/06321 gezeigte Spritzgießmaschine dient der Herstellung von spritzgegossenen oder extrudierten Formteilen aus zusammengemischten Materialen. Hierbei handelt es sich beispielsweise um Kunststoffe mit zusätzlichen Komponenten wie Fasern, Teilchen, Bindemittel oder anderen Zusatzstoffen. Das Kunststoffgranulat wird in einem Doppel- oder Mehrfachschnecken-Compounder aufgeschmolzen; die zusätzlichen Komponenten werden ebenfalls in den Compounder gegeben und möglichst homogen mit der Kunststoffschmelze vermischt. Gemäß der Ausführungsform in Figur 2 von WO86/06321 geht von dem vorderen Ende des Compounders eine Schmelzeleitung aus und mündet im hinteren Bereich eines Einspritzraums, in dem ein Einspritzkolben reversierbar geführt ist. Die Schmelze durchströmt eine am vorderen Ende des Einspritzkolbens angeordnete Rückströmsperre und füllt den Einspritzraum vor dem Einspritzkolben und schiebt diesen dabei zurück. Wenn genügend Schmelze in dem Einspritzraum vorhanden ist, wird der Compounder gestoppt und die Zufuhr von Schmelze unterbrochen. Die in dem Einspritzraum gespeicherte Schmelze wird durch eine druckmittelbetätigte Vorwärtsbewegung des Einspritzkolben in das Spritzgießwerkzeug eingespritzt.
Nach dem Befüllen der Formteilkavität übernimmt ein dem Einspritzraum nachgeschalteter und in den zur Formteilkavität führenden Schmelzeaustrittskanal eingreifender Nachdruckkolben die Funktion, den sich an den Einspritzraum anschließenden Schmelzeaustrittskanal abzusperren und gegebenenfalls einen Nachdruck zu erzeugen. Diese bekannte Spritzgießmaschine besitzt zwar die Vorzüge eines unidirektionalen Schmelzeflusses (first in, first out) und vermeidet die bei mehreren Kolbeneinspritzeinrichtungen vorhandenen langen Schmelzewege (wie zum Beispiel in der DE 195 05 984 A1). Nachteilig ist jedoch, dass der Compounder während der Einspritz-und Nachdruckphase angehalten werden muss. Dies wirkt sich negativ auf die Schmelzeeigenschaften aus, denn gerade ein kontinuierlicher Betrieb eines Compounders (oder Extruders) sorgt für eine durchgehend homogene Schmelze. Außerdem sind Rückströmsperren ungünstig bei der Verarbeitung von mit Lang- oder Naturfasern gefüllten Schmelzen, da aufgrund des Durchströmens von schmalen und gewundenen Öffnungen in der Rückströmsperre die Fasern leicht beschädigt werden können.

Aus der DE 2201404 A ist ein Einschneckenextruder bekannt, dessen vorderes Ende über eine absperrbare leitung mit einem Einspritzraum verbunden ist, wobei in dem Einspritzraum ein Einspritzkolben reversierbar geführt ist, mit dem Schmelze aus dem Einspritzraum in ein Spritzgießwerkzeug eingespritzt werden kann. Bei geschlossenem Absperrventil kann Schmelze in einem Kanal im Inneren des Extruderschnecke gepuffert werden.

Aufgabe der vorliegenden Erfindung ist es daher, eine Spritzeinheit für Spritzgießmaschinen der bekannten Art dahingehend zu verbessern, dass ein dauerhaft kontinuierlicher Betrieb der Plastifiziereinheit unabhängig von der Zykluszeit mit dem intermittierenden Betrieb des Spritzgießens möglich ist.

Die Lösung dieser Aufgabe erfolgt durch eine Spritzeinheit mit den Merkmalen der Patentansprüche 1 und 5. Wenn erfindungsgemäß ein Extruder mit einer oder mehreren Plastifizierschnecken vorgesehen ist, wobei der Extruder derart gestaltet ist, daß sich bei geschlossenem Absperrventil die Rückstaulänge R_{L} nach hinten in den Extruder vergrößern kann, bietet der Extruder selbst einen ausreichend großen Püfferbereich zum "Zwischenspeichern" von Schmelze während der Einspritz- und Nachdruckphase, wenn das in der Schmelzeleitung angeordnete Ventil geschlossen ist. Dies gilt insbesondere bei der Herstellung von dünnwandigen Formteilen, bei denen die Abkühlzeit relativ kurz ist, so daß der Extruder kontinuierlich weiterbetrieben werden kann und die Schmelze in dem Freiraum zwischen den Schnecken gepuffert werden kann. In einer einfachen Version kann gemäß Unteranspruch 2 ein herkömmlicher Doppelschneckenextruder mit zwei gleichsinnig drehenden Plastifizierschnecken vorgesehen werden, da bei diesem bauartbedingt zwischen den Schnecken genügend Freiraum vorhanden ist, in dem sich die Schmelze aufstauen kann und sich somit die Rückstaulänge R_{L} problemlos nach hinten vergrößern kann.

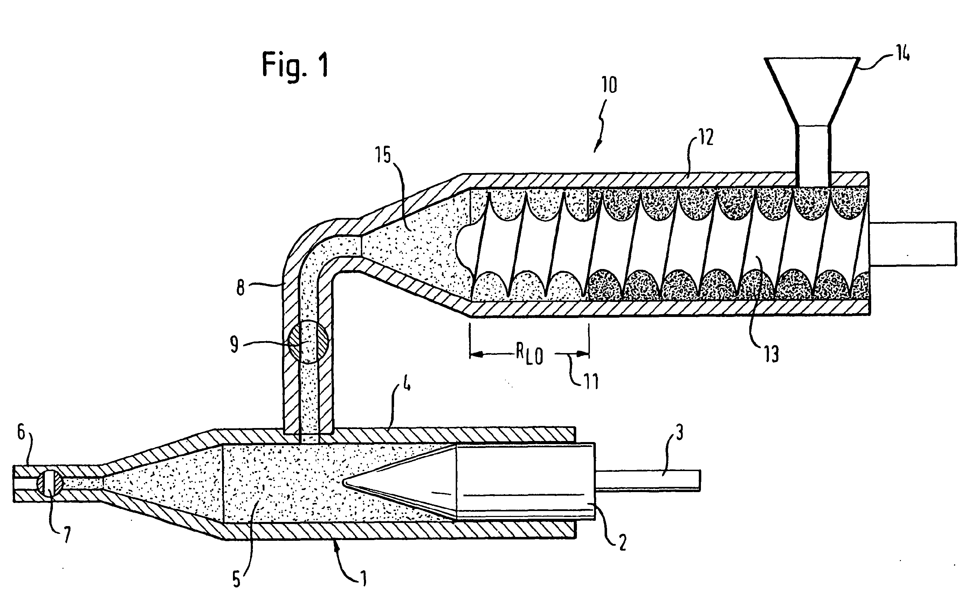

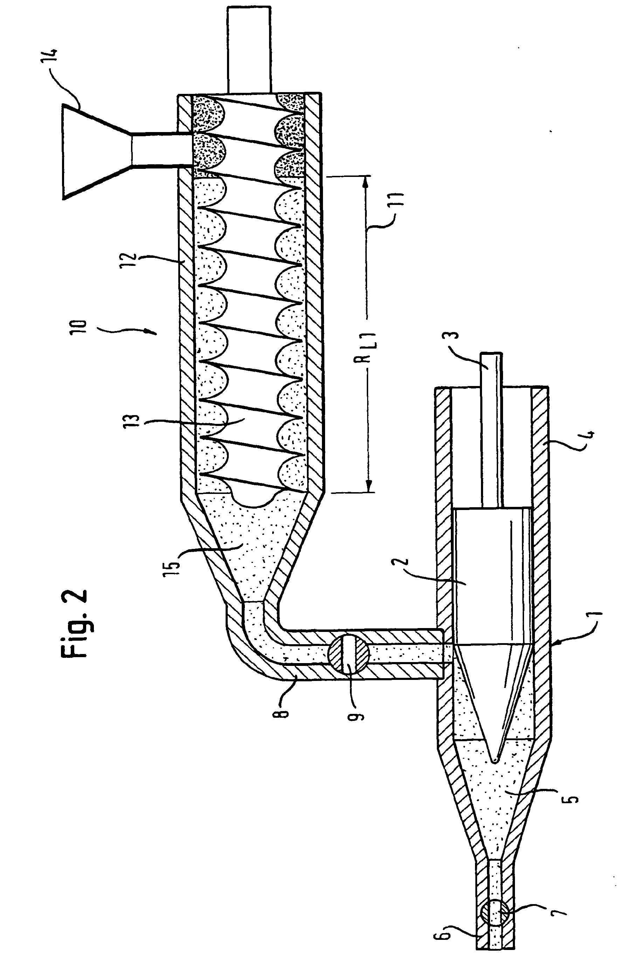

Nachfolgend soll die Erfindung anhand eines Ausführungsbeispiels und unter Bezugnahme auf die Figuren 1 und 2 näher erläutert werden. Es zeigen:
- Fig.1: Einkolben-Einspritzsystem mit zurückgefahrenem Einspritzkolben und kurz vor dem Einspritzen;
- Fig.2: Einkolben-Einspritzsystem mit vorgefahrenem Einspritzkolben und nach dem Einspritzen.

Die erfindungsgemäße Spritzeinheit umfasst zunächst eine Kolbeneinspritzeinheit 1 mit einem darin druckmittelbetätigt reversierbar geführten Einspritzkolben 2, der über eine Kolbenstange 3 an eine hier nicht dargestellte Kolben-Zylindereinheit angeschlossen ist. Vor dem Einspritzkolben 2 wird in dem Gehäuse 4 der Kolbeneinspritzeinheit 1 ein die Schmelze aufnehmender Einspritzraum 5 gebildet, der sich in Richtung der Einspritzdüse 6 konisch verjüngt. Mittels eines ersten Absperrventils 7 kann der Durchtritt der Schmelze aus dem Einspritzraum 5 in das hier nicht gezeigte Spritzgießwerkzeug geschlossen und freigegeben werden. Im vorderen Bereich des Einspritzraums 5 mündet eine Schmelzeleitung 8, in der ein aktiv schaltbares Absperrventil 9 angeordnet ist. Weiterhin ist zum Plastifizieren des Kunststoffs ein Extruder 10 vorgesehen, der erfindungsgemäß derart gestaltet ist, daß sich bei geschlossenem Absperrventil 9 die Rückstaulänge R_{L} (Ziffer 11) nach hinten in den Extruder vergrößern kann. In dem Extrudergehäuse 12 sind ein oder mehrere Plastifizierschnecken 13 angeordnet, die mittels eines Motors und eines Getriebes in üblicher Weise angetrieben werden können. Beispielsweise kann ein Doppelschneckenextruder mit zwei gleichsinnig drehenden Plastifizierschnecken vorgesehen werden. Das Kunststoffgranulat wird dem Extruder 10 über einen Einfülltrichter 14 zugeführt.

Während des Betriebs der Spritzgießmaschine wird die Plastifiziereinheit 10 kontinuierlich betrieben und der Einspritzraum 5 bei geöffnetem Absperrventil 9 mit Schmelze gespeist. Figur 1 zeigt die Situation vor dem Einspritzen, bei zurückgefahrenem Einspritzkolben 2 und mit einer Ausgangs-Rückstaulänge R_{L0} (siehe auch Ziffer 11 in Figur 1). Im nächsten Schritt wird das Absperrventil 9 in der Schmelzeleitung 8 geschlossen, wie dies in Figur 2 dargestellt ist, das Absperrventil 7 vor der Einspritzdüse 6 geöffnet und mittels einer nicht dargestellten hydraulischen Stelleinrichtung der Spritzhub des Einspritzkolbens 2 eingeleitet, um das Werkzeug der Spritzgießmaschine mit Schmelze zu befüllen.

Die Figur 2 zeigt die Situation am Ende des Spritzhubs. Der Einspritzkolben 2 befindet sich in dem Gehäuse 4 in seiner vordersten Stellung und der Einspritzraum 5 besitzt sein Minimalvolumen.

Im nächsten Schritt wird das Absperrventil 7 vor der Einspritzdüse 6 geschlossen, das Absperrventil 9 in der Schmelzeleitung 8 geöffnet und der Einspritzkolben 2 wird von der nachfließenden Schmelze nach hinten verfahren.

Da die Plastifizierschnecke ununterbrochen rotiert und Material über den Fülltrichter 14 zugeführt wird, wird andauernd Schmelze erzeugt. Vorliegend kann auch während des Spritzhubs und während der Verweilzeit des Spritzlings in der Form die Plastifiziereinheit weiterbetrieben werden, denn in dieser Zeit kann sich bei geschlossenem Absperrventil 9 in dem Doppelschneckenextruder 10 der sich im Schneckenvorraum 15 aufbauende Druck P1 nach hinten fortsetzen und in den Schneckengängen wird nach und nach ein Füllgrad von 1 erzeugt. Die Rückstaulänge R_{L} vergrößert sich auf einen Wert R_{L1}. Der kontinuierliche Betrieb der Plastifiziereinheit ist insbesondere bei dünnwandigen Formteilen bzw kurzen Zykluszeiten gewährleistet, da für einen übermäßigen Druckaufbau P1 in dem Schneckenvorraum 15 nicht genügend Zeit verbleibt und in der kurzen Zeit Schmelze in dem Bereich 11 gepuffert werden kann, wie dies aus der Figur 2 ersichtlich ist. Bei einem Doppelschneckenextruder mit zwei gleichsinnig drehenden Plastifizierschnecken bleibt zwischen den Plastifizierschnecken genügend Freiraum (keine geschlossenen Schneckengänge), der eine ausreichende Vergrößerung der Rückstaulänge R_{L} erlaubt und somit einen ausreichend großen Pufferbereich 11 bildet. Dabei nimmt der sich im Schneckenvorraum 15 aufbauende Druck P1 in der Regel linear von dem Schneckenvorraum 15 nach hinten in den Freiraum zwischen den Plastifizierschnecken ab. Anstelle des hier beschriebenen Doppelschneckenextruders mit gleichsinnig drehenden Plastifizierschnecken können auch andere Bauarten verwendet werden, wie sie mit den Merkmalen der Ansprüche 3, 4 und 5 charakterisiert sind.

### Bezugszeichenliste

- 1: Kolbeneinspritzeinheit
- 2: Einspritzkolben
- 3: Kolbenstange
- 4: Gehäuse der Kolbeneinspritzeinheit 1
- 5: Einspritzraum
- 6: Einspritzdüse
- 7: Erstes Absperrventil
- 8: Schmelzeleitung
- 9: Zweites Absperrventil
- 10: Doppelschneckenextruder
- 11: Rückstaulänge bzw. Pufferbereich
- 12: Schneckengehäuse
- 13: Plastifizierschnecken
- 14: Einfülltricher
- 15: Schneckenvorraum

## Patentansprüche

1. Spritzeinheit für Spritzgießmaschinen mit einem Extruder als Plastifiziereinheit, mit einer über eine Einspritzdüse (6) mit der Spritzgießmaschine koppelbaren, Kolbeneinspritzeinrichtung (1), wobei die Kolbeneinspritzeinrichtung (1) einen Einspritzkolben (2) aufweist, und wobei der Raum vor dem Einspritzkolben (2) einen Einspritzraum (5) bitdet, wobei das vordere Ende des Extruders über eine Schmelzeleitung (8) mit dem Einspritzraum (5) verbunden ist, wobei in der Schmelzeleitung (8) ein Absperrventil (9) vorgesehen ist und wobei zum Plastifizieren ein kontinuierlich betreibbarer Extruder (10) mit mehreren Plastifizierschnecken (13) vorgesehen ist, wobei der Extruder derart gestaltet ist, daß zwischen den Plastifizierschnecken (21) Freiraum vorhanden ist, so dass bei geschlossenem Absperrventil (9) Schmelze über eine Rückstaulänge R_{L} (11) nach hinten in den Extruder (10) gepuffert werden kann.

2. Spritzeinheit nach Anspruch 1, **dadurch gekennzeichnet, daß** ein Doppelschneckenextruder mit zwei gleichsinnig drehenden Plastifizierschnecken vorgesehen ist.

3. Spritzeinheit nach Anspruch 1, **dadurch gekennzeichnet, daß** ein Doppelschneckenextruder mit zwei gegensinnig drehenden Plastifizierschnecken vorgesehen ist und daß im Bereich der Rückstaulänge R_{L} der Schneckenaussendurchmesser der Plastifizierschnecken einen reduzierten Durchmesser aufweist und/oder der Zylinderdurchmesser des Extruder- bzw. Schneckengehäuses (12) vergrößert ist und/oder Durchbrüche in den Schneckenstegen vorgesehen sind.

4. Spritzeinheit nach Anspruch 1, **dadurch gekennzeichnet, daß** ein Doppelschneckenextruder mit tangierenden, d.h. nicht kämmenden Plastifizierschnecken vorgesehen ist.

5. Spritzeinheit für Spritzgießmaschinen mit einem Extruder als Plastifiziereinheit, mit einer über eine Einspritzdüse (6) mit der Spritzgießmaschine koppelbaren, Kolbeneinspritzeinrichtung (1), wobei die Kolbeneinspritzeinrichtung (1) einen Einspritzkolben (2) aufweist, und wobei der Raum vor dem Einspritzkolben (2) einen Einspritzraum (5) bildet, wobei das vordere Ende des Extruders über eine Schmelzeleitung (8) mit dem Einspritzraum (5) verbunden ist, wobei in der Schmelzeleitung (8) ein Absperrventil (9) vorgesehen ist, wobei zum Plastifizieren ein kontinuierlich betreibbarer Einschneckenextruder vorgesehen ist, und wobei im Bereich einer Rückstaulänge R_{L} der Schneckenaussendurchmesser der Plastifizierschnecke (13) einen reduzierten Durchmesser aufweist und/oder der Zylinderdurchmesser des Extruder- bzw. Schneckengehäuses (12) vergrößert ist und/oder Durchbrüche in den Schneckenstegen vorgesehen sind, so dass bei geschlossenem Absperrventil (9) Schmelze über die Rückstaulänge R_{L} nach hinten in den Extruder gepuffert werden kann.

6. Spritzeinheit nach einem der Ansprüche 1 bis 5, **dadurch gekennzeichnet, daß** der Schmelzekanal (8) im vorderen Endbereich des Einspritzraums (5) in diesen mündet.

7. Spritzeinheit nach einem der Ansprüche 1 bis 6, **dadurch gekennzeichnet, daß** als Absperrventil in der Schmelzleitung (8) ein aktiv schaltbares Absperrventil (9) vorgesehen ist.

8. Verfahren zum Betreiben einer Spritzgießmaschine mit einer Spritzeinheit nach einem der Ansprüche 1 bis 6, **dadurch gekennzeichnet, daß** der Extruder (10) kontinuierlich betrieben wird.

9. Verfahren nach Anspruch 8, **dadurch gekennzeichnet, daß** während der Einspritz- und Nachdruckphase der Schmelzekanal (8) abgesperrt wird.

10. Verfahren nach Anspruch 8, **dadurch gekennzeichnet, daß** der Drehantrieb für die Plastifizierschnecken (13) während des Einspritzens und/oder während der Nachdruckphase mit reduzierter Plastifizierdrehzahl weiterbetrieben wird.

## Claims

1. An injection unit for injection moulding machines comprising an extruder as a plasticizing unit, comprising a plunger injection device (1) which can be coupled to the injection moulding machine via an injection nozzle (6), wherein the plunger injection device (1) has an injection plunger (2) and wherein the space in front of the injection plunger (2) forms an injection space (5), wherein the front end of the extruder is connected to the injection space (5) via a melt line (8), wherein a stop valve (9) is provided in the melt line (8), and wherein a continuously operable extruder (10) having a plurality of plasticizing screws (13) is provided for plastification, wherein the extruder is configured in such a manner that free space is provided between the plasticizing screws (21) so that when the stop valve (9) is closed, melt can be buffered backwards into the extruder (10) via a back draft length R_{L} (11) .

2. The injection unit according to claim 1, **characterised in that** a double-screw extruder is provided with two plasticizing screws rotating in the same direction.

3. The injection unit according to claim 1, **characterised in that** a double-screw extruder is provided with two plasticizing screws rotating in opposite directions and that in the area of the back draft length R_{L}, the screw outside diameter of the plasticizing screws has a reduced diameter and/or the cylinder diameter of the extruder or screw housing (12) is enlarged and/or openings are provided in the screw lands.

4. The injection unit according to claim 1, **characterised in that** a double-screw extruder is provided with tangent, i.e., non-engaging plasticizing screws.

5. An injection unit for injection moulding machines comprising an extruder as a plasticizing unit, comprising a plunger injection device (1) which can be coupled to the injection moulding machine via an injection nozzle (6), wherein the plunger injection device (1) has an injection plunger (2) and wherein the space in front of the injection plunger (2) forms an injection space (5), wherein the front end of the extruder is connected to the injection space (5) via a melt line (8), wherein a stop valve (9) is provided in the melt line (8), wherein in the area of the back draft length R_{L} the screw outside diameter of the plasticizing screw (13) has a reduced diameter and/or the cylinder diameter of the extruder or screw housing (12) is enlarged and/or openings are provided in the screw lands so that when the stop valve (9) is closed, melt can be buffered backwards into the extruder (10) via a back draft length R_{L} (11) .

6. The injection unit according to any one of claims 1 to 5, **characterised in that** the melt channel (8) in the front end area of the injection space (5) opens therein.

7. The injection unit according to any one of claims 1 to 6, **characterised in that** an actively switchable stop valve (9) is provided as the stop valve in the melt line (8).

8. A method for operating an injection moulding machine comprising an injection unit according to any one of claims 1 to 6, **characterised in that** the extruder (10) is operated continuously.

9. The method according to claim 8, **characterised in that** the melt channel (8) is shut off during the injection and holding pressure stage.

10. The method according to claim 8, **characterised in that** during the injection and/or during the holding pressure stage the rotary drive for the plasticizing screws (13) is operated further at reduced plasticizing speed.

## Revendications

1. Unité d'injection pour machines de moulage par injection équipée d'une extrudeuse faisant office d'unité de plastification, comportant un dispositif d'injection à piston (1) pouvant être couplé par une buse d'injection (6) à la machine de moulage par injection, le dispositif d'injection à piston (1) comportant un piston d'injection (2) et l'espace en amont du piston d'injection (2) constituant une chambre d'injection (5), tandis que l'extrémité avant de l'extrudeuse est reliée par une conduite de coulée (8) à la chambre d'injection (5), qu'une soupape d'arrêt (9) est prévue dans la conduite de coulée (8) et qu'il est prévu pour la plastification une extrudeuse pouvant fonctionner en continu (10) équipée de plusieurs vis de plastification (13), l'extrudeuse étant conçue de manière à ce qu'il y ait entre les vis de plastification (21) un espace libre, de sorte que, lorsque la soupape d'arrêt (9) est fermée, de la coulée peut être tamponnée vers l'arrière dans l'extrudeuse (10) sur une longueur de refoulement R_{L} (11).

2. Unité d'injection selon la revendication 1, **caractérisée en ce qu'**il est prévu une extrudeuse à double vis comportant deux vis de plastification tournant dans le même sens.

3. Unité d'injection selon la revendication 1, **caractérisée en ce qu'**il est prévu une extrudeuse à double vis comportant deux vis de plastification tournant dans le sens inverse et qu'au niveau de la longueur de refoulement R_{L}, le diamètre extérieur de vis des vis de plastification présente un diamètre réduit et/ou que le diamètre de cylindre du boîtier d'extrudeuse ou de vis (12) est agrandi et/ou que des percées sont prévues dans les traverses des vis.

4. Unité d'injection selon la revendication 1, **caractérisée en ce qu'**il est prévu une extrudeuse à double vis équipée de vis de plastification tangentes, c'est-à-dire non empeignées.

5. Unité d'injection pour machines de moulage par injection équipée d'une extrudeuse faisant office d'unité de plastification, comportant un dispositif d'injection à piston (1) pouvant être couplé par une buse d'injection (6) à la machine de moulage par injection, le dispositif d'injection à piston (1) comportant un piston d'injection (2) et l'espace en amont du piston d'injection (2) constituant une chambre d'injection (5), tandis que l'extrémité avant de l'extrudeuse est reliée par une conduite de coulée (8) à la chambre d'injection (5), qu'une soupape d'arrêt (9) est prévue dans la conduite de coulée (8) et qu'il est prévu pour la plastification une extrudeuse à une vis pouvant fonctionner en continu (10) et qu'au niveau d'une longueur de refoulement R_{L}, le diamètre extérieur de vis de la vis de plastification (13) présente un diamètre réduit et/ou que le diamètre de cylindre du boîtier d'extrudeuse ou de vis (12) est agrandi et/ou que des percées sont prévues dans les traverses des vis, de sorte que, lorsque la soupape d'arrêt (9) est fermée, de la coulée peut être tamponnée vers l'arrière dans l'extrudeuse (10) sur la longueur de refoulement R_{L}.

6. Unité d'injection selon une des revendications 1 à 5, **caractérisée en ce que** le canal de coulée (8), à l'extrémité avant de la chambre d'injection (5), débouche dans celle-ci.

7. Unité d'injection selon une des revendications 1 à 6, **caractérisée en ce qu'**il est prévu comme soupape d'arrêt dans la conduite de coulée (8) une soupape d'arrêt (9) pouvant être mise en activation.

8. Procédé d'utilisation d'une machine de moulage par injection équipée d'une unité d'injection selon une des revendications 1 à 6, **caractérisée en ce que** l'extrudeuse (10) fonctionne en continu.

9. Procédé selon la revendication 8, **caractérisée en ce que**, pendant la phase d'injection et de compression finale, le canal de coulée (8) est barré.

10. Procédé selon la revendication 8, **caractérisée en ce que** la commande rotative pour les vis de plastification (13) continue à fonctionner pendant l'injection et/ou pendant la phase de compression finale avec un régime de plastification réduit.
